# EUROPÄISCHE PATENTSCHRIFT

(11) **EP 3 451 096 B1**
(45) Veröffentlichungstag und Bekanntmachung des Hinweises auf die Patenterteilung: **16.02.2022**
(21) Anmeldenummer: 18192338.4
(22) Anmeldetag: 04.09.2018
(51) Int. Cl.: G05B 19/418

(54) **BEARBEITUNGSSYSTEM MIT EINER AUF EINEM FAHRZEUG ANGEORDNETEN AUFNAHMEEINHEIT FÜR MINDESTENS EIN BAUTEIL UND VERFAHREN ZUM BEARBEITEN MINDESTENS EINES BAUTEILS**
PROCESSING SYSTEM COMPRISING A PICK-UP UNIT ARRANGED ON A VEHICLE FOR AT LEAST ONE COMPONENT AND METHOD FOR MACHINING AT LEAST ONE COMPONENT
SYSTÈME D'USINAGE DOTÉ D'UNE UNITÉ DE RÉCEPTION AGENCÉE SUR UN VÉHICULE POUR AU MOINS UN COMPOSANT ET PROCÉDÉ D'USINAGE D'AU MOINS UN COMPOSANT

(30) Priorität: 05.09.2017 DE 102017008316
(43) Veröffentlichungstag der Anmeldung: 06.03.2019
(73) Patentinhaber: AUDI AG, 85045 Ingolstadt (DE)
(72) Erfinder: Schmidt, Jörg, 85057 Ingolstadt (DE); Gerstmann, Thomas, 93339 Riedenburg (DE); Maier, Tashina, 80687 München (DE)

(56) Entgegenhaltungen:
- DD-A1- 220 885
- DE-A1-102005 042 179
- DE-A1-102016 217 377
- DE-A1-102016 223 617
- DE-T2- 69 032 398
- US-A- 5 020 001
- US-A1- 2017 192 415

## Beschreibung

Die vorliegende Erfindung betrifft ein Verfahren zum Bearbeiten mindestens eines Bauteils mit einem Bearbeitungssystem zum Ausrichten und Bearbeiten mindestens eines Bauteils mit mindestens einer auf mindestens einem Fahrzeug angeordneten Aufnahmeeinheit zum Aufnehmen des Bauteils, bei dem das mindestens eine Bauteil durch die Aufnahmeeinheit und/oder durch das mindestens eine Fahrzeug in mindestens zwei Richtungen verfahrbar ist.

Es gibt verschiedene Produktionseinrichtungen zum Herstellen oder Bearbeiten von Bauteilen. Es werden dabei üblicherweise zum Positionieren von Bauteilen stationäre Roboter verwendet. Die Roboter können beispielsweise Bauteile aufnehmen und in einen Arbeitsbereich einlegen. In dem Arbeitsbereich kann das Bauteil anschließend von einem Werkzeug bearbeitet werden. Oftmals ist ein Werkzeug auch auf einem Roboterarm angeordnet, sodass unterschiedliche Bauteile aufgrund von vielen möglichen Freiheitsgraden des Roboterarms flexibel bearbeitet werden können. Bei mehreren Bearbeitungsschritten müssen Bauteile zwischen mehreren Arbeitsbereichen transportiert und in jedem Arbeitsbereich separat bearbeitet oder modifiziert werden. Den Transport der Bauteile können üblicherweise fahrerlose Transportfahrzeuge übernehmen.

DE 20 2013 004 209 U1 offenbart ein fahrerloses Transportfahrzeug, insbesondere für die Materialbereitstellung an Montagelinien mit einer Hubvorrichtung.

EP 3 034 324 offenbart ein Mecanumradfahrzeug für omnidirektionale Fahrmanöver, insbesondere ohne mechanische Lenkung und ein entsprechendes System.

DE 10 2016 217377 A1 offenbart eine insbesondere als eine Druckmaschine ausgebildete Bearbeitungsmaschine mit mehreren Bearbeitungsstationen zum Bearbeiten von (Hohl-)Körpern, wobei die zum Bearbeiten der Körper vorgesehenen Bearbeitungsstationen in einem Arbeitsraum jeweils an voneinander verschiedenen Positionen angeordnet sind, wobei in dem Arbeitsraum mehrere zeitgleich betriebene oder zumindest zeitgleich betreibbare Handhabungseinrichtungen vorgesehen sind, wobei jede dieser Handhabungseinrichtungen jeweils mindestens einen von einer Steuereinrichtung mittels Steuerdaten gesteuerten Antrieb aufweist, wobei durch diese Steuerdaten eine Bewegung der jeweiligen Handhabungseinrichtung entlang einer Bewegungsbahn vorgegeben ist, wobei die jeweiligen entlang ihrer Bewegungsbahn auszuführenden von der Steuereinrichtung gesteuerten Bewegungen dieser mehreren im selben Arbeitsraum angeordneten Handhabungseinrichtungen jeweils unter Berücksichtigung einer Phasenverschiebung zwischen zyklisch ausgeführten Bewegungsabläufen verschiedener Handhabungseinrichtungen und/oder von Wartezeiten und/oder von Beschleunigungszeiten oder von Abbremszeiten innerhalb dieser Bewegungsabläufe der am Bearbeitungsprozess beteiligten Handhabungseinrichtungen gesteuert sind.

US 2017/192415 A1 betrifft ein System zum Herstellen einer Komponente innerhalb einer Fabrik. Das System kann ein autonomes Fahrzeug aufweisen, das dazu konfiguriert ist, die Komponente zu einem Bereich innerhalb eines offenen Raums der Fabrik zu transportieren und die Komponente an dem Bereich während der Verarbeitung eines bestimmten Volumens der Komponente zu sichern. Das System kann auch eine Vielzahl von Verarbeitungsmodulen aufweisen, von denen jedes dazu konfiguriert ist, einen Teil der Komponente zu verarbeiten, die weniger als das Gesamtvolumen des bezeichneten Volumens beträgt, und eine Steuerung in Kommunikation mit dem autonomen Fahrzeug und der Vielzahl von Verarbeitungsmodulen. Der Controller kann konfiguriert sein, um Operationen der Vielzahl von Verarbeitungsmodulen gemäß einem programmierten Prozessplan zu koordinieren.

DE 10 2016 223617 A1 offenbart ein Verfahren zum Ausführen zumindest einer Fertigungsaufgabe. Das Verfahren umfasst dabei die folgenden Schritte: Bereitstellen einer mobilen fahrerlosen Fertigungseinheit, welche dazu ausgebildet ist, sich zwischen verschiedenen Positionen im Raum zu bewegen, wobei die mobile fahrerlose Fertigungseinheit zumindest eine Fertigungseinrichtung umfasst, und Ausführen einer Fertigungsaufgabe mittels der Fertigungseinrichtung der mobilen fahrerlosen Fertigungseinheit während sich die mobile fahrerlose Fertigungseinheit von einer ersten Position zu einer zweiten Position im Raum bewegt.

DE 10 2005 042179 A1 betrifft eine flexible Fertigungszelle für die Bearbeitung von Bauteilen, insbesondere von Kraftfahrzeugkarosserien. Neben einer Arbeitsstation ist auf mindestens einer ihrer gegenüberliegenden Seiten ein mit einem Werkzeug bestückter Bearbeitungsroboter angeordnet. Jeder Bearbeitungsroboter ist auf einer neben der Arbeitsstation angeordneten Brücke in Richtung ihrer Längsachse verfahrbar. Ein Wagen mit einer darauf ablegbaren Spannvorrichtung für das Bauteil ist aus einer Parkposition unter der Brücke quer zur Längsachse der Brücke in die Arbeitsstation verfahrbar. Vor und/oder hinter der Arbeitsstation und neben der Brücke ist eine Hub- und Drehvorrichtung angeordnet, die mit Kupplungsmitteln an die Spannvorrichtung kuppelbar ist und mit der die Spannvorrichtung von dem Wagen abhebbar und um eine zur Längsachse der Brücke parallele Achse drehbar ist.

DD 220 885 A1 betrifft einen Schweißroboter in Portalausführung, welcher sich besonders zum Schweißen großer Bauteile, beispielsweise zum Verschweißen der Träger des Untergestells von Schienenfahrzeugen eignet. Der Schweißroboter verfügt über bewegliche Translations-, Rotations- und Schwenkbaugruppen, die zwei sich gegenüberliegende Schweißwerkzeuge tragen. Jedem Schweißwerkzeug ist einer der beidseitig des Portals gelegenen, auf Gleitschienen verschiebbaren Werkstückaufnahmen zugeordnet, welche aus Rotationsbaugruppen bestehen.

Stationäre Roboter zum Bearbeiten von Bauteilen können kostenintensiv sein. Insbesondere bei einer größeren Anzahl an Arbeitsbereichen zum Durchführen von verschiedenen Bearbeitungsschritten kann eine Vielzahl an stationären Robotern mit Werkzeugen notwendig sein. Des Weiteren ist für einen stationären Roboter eine relativ große Fläche zum Ausnutzen von allen Freiheitsgraden des Roboters bzw. dessen Roboterarms notwendig. Aufgrund einer begrenzten Fläche in einer Produktionseinrichtung kann eine maximale Anzahl an Robotern begrenzt sein und durch von zu bearbeitenden Bauteilen belegte Roboter ein Fertigungsstau zwischen Bearbeitungsschritten entstehen.

Der Erfindung liegt daher die Aufgabe zugrunde, ein Verfahren zum Bearbeiten mindestens eines Bauteils mit einem Bearbeitungssystem zum Ausrichten und Bearbeiten eines Bauteils vorzuschlagen, bei dem stationär angeordnete Bearbeitungseinheiten möglichst einfach und vorzugsweise weitestgehend unbeweglich ausgeführt werden können.

Die vorstehend aufgeführte Aufgabe wird durch die Merkmale des unabhängigen Anspruchs 1 gelöst.

Die vorliegende Erfindung nutzt ein Bearbeitungssystem zum Ausrichten und Bearbeiten mindestens eines Bauteils. Das Bearbeitungssystem weist mindestens eine auf mindestens einem Fahrzeug angeordnete Aufnahmeeinheit zum Aufnehmen des mindestens einen Bauteils und mindestens eine Bearbeitungseinheit mit einem Arbeitsbereich auf, wobei in dem Arbeitsbereich mindestens ein Werkzeug angeordnet ist. Dabei ist das mindestens eine Bauteil, wenn es von der Aufnahmeeinheit aufgenommen ist, durch die Aufnahmeeinheit und/oder durch das mindestens eine Fahrzeug, auf dem die Aufnahmeeinheit angeordnet ist, in mindestens zwei Richtungen verfahrbar.

Die Bearbeitungseinheit weist in dem Arbeitsbereich mindestens ein Werkzeug auf. Das Werkzeug kann dabei beispielsweise eine Reinigungsdüse, ein rotierbarer Werkzeugkopf mit einem Reinigungsflies, ein stationärer Werkzeugkopf mit einem bspw. umlaufenden Reinigungsflies, eine Schmierdüse zum Applizieren eines Schmiermittels, eine Düse zum Applizieren eines Dichtmittels, ein Laser zum Schweißen oder Bearbeiten des Bauteils, ein Bohrwerkzeug zum Einbringen mindestens einer Bohrung in das Bauteil, ein Fräswerkzeug oder Schneidwerkzeug, mindestens eine Düse zum Applizieren von einer Grundierung und/oder einer Lackierung oder dergleichen auf dem Bauteil sein. Das Werkzeug kann feststehend bzw. unbeweglich oder beweglich und/oder zum Teil feststehend und zum Teil beweglich sein. Beispielsweise kann das Werkzeug in mindestens einer Richtung, wie beispielsweise einer z-Achse, verfahrbar sein. Die z-Achse entspricht hierbei bspw. einer Richtung entsprechend einem Abstand des Bauteils von dem Werkzeug bzw. einer Höhenrichtung.

Wurde bislang vorgesehen, dass sich ein Roboter oder ein Portal nur in einer Ebene bewegt, z. B. beim Auftragen eines Dichtmittels auf einer Flanschfläche, so kann mit Hilfe des Bearbeitungssystems an dieser Stelle auf den Roboter oder das Portal verzichtet werden. Die vorgesehenen mindestens zwei Richtungen zum Verfahren des mindestens einen Bauteils sind eine x-Richtung und eine y-Richtung, welche orthogonal zueinander und zu der z-Achse bzw. einer z-Richtung sind. Beispielsweise kann die voranstehend genannte Flanschfläche, auf der ein Dichtmittel aufzubringen ist, durch die x-Richtung und die y-Richtung definiert sein. Bei unterschiedlichen Bearbeitungsschritten mit einem Werkzeug kann es vorteilhaft sein, wenn das mindestens eine Bauteil anstelle des Werkzeuges bewegt wird. Bei dem Bearbeitungssystem kann das mindestens eine Bauteil mittels der Aufnahmeeinheit aufgenommen, zu einer bei der Bearbeitung des Bauteils aktuell anzufahrenden Bearbeitungseinheit gefahren bzw. transportiert, im Arbeitsbereich der Bearbeitungseinheit relativ zu dem dort angeordneten Werkzeug in mindestens zwei Richtungen bewegt und dabei gleichzeitig oder nach einer abgeschlossenen Positionierung des Bauteils durch das Werkzeug bearbeitet werden. Hierdurch können kostenintensive und einen relativ hohen Flächenbedarf aufweisende Roboter, die bislang in den jeweiligen Arbeitsbereichen der Bearbeitungseinheiten vorgesehen waren und die häufig einfache Bewegungen ausführen mussten, ersetzt und Flächen in Produktionshallen eingespart werden.

Die Aufnahmeeinheit kann beispielsweise ein verfahrbarer Aufnahmebereich für mindestens ein Bauteil sein. Alternativ kann die Aufnahmeeinheit ein Roboterarm sein, welcher mindestens ein Bauteil aufnehmen und relativ zu einem Werkzeug und dem jeweiligen Bearbeitungsschritt positionieren und ausrichten kann. Dabei kann die Ausrichtung und Positionierung des Bauteils auch dynamisch während der Bearbeitung und insbesondere in Abhängigkeit von bzw. in Abstimmung mit der Bearbeitung des Bauteils erfolgen.

Das mindestens eine Fahrzeug und damit in der Regel auch die auf dem mindestens einen Fahrzeug angeordnete Aufnahmeeinheit können beispielsweise ferngesteuert oder auch manuell von einem Fahrer steuerbar sein. Dies ermöglicht, dass die auf dem Fahrzeug angeordnete Aufnahmeeinheit ihre Position und ihre Ausrichtung und so die des aufgenommenen mindestens einen Bauteils verändern und unterschiedliche Arbeitsbereiche von Bearbeitungseinheiten anfahren und sich und somit das mindestens eine Bauteil dort relativ zu dort jeweils angeordneten Werkzeugen ausrichten kann. Alternativ können mit mehreren Fahrzeugen mit aufgenommenen Bauteilen unterschiedliche Bearbeitungseinheiten gleichzeitig angefahren werden. Hierbei können die jeweiligen Bearbeitungseinheiten technisch einfacher ausgeführt sein, da die mindestens eine Aufnahmeeinheit das mindestens eine Bauteil positionieren und ausrichten kann und nicht ein bei der Bearbeitungseinheit vorgesehenes Werkzeug, wie bisher, relativ zu dem mindestens einen Bauteil ausgerichtet werden muss. Insbesondere kann das mindestens eine Bauteil durch eine Kinematik des Fahrzeugs in zumindest zwei Richtungen verfahren werden. Hierdurch kann das Bauteil durch die Antriebsmotoren des Fahrzeugs ausgerichtet und bewegt bzw. verfahren werden. Durch die auf dem mindestens einen Fahrzeug angeordnete Aufnahmeeinheit kann die Anzahl an unabhängig von dem Fahrzeug aktiv steuerbaren Positioniereinheiten und Übergabeeinheiten zwischen mehreren Bearbeitungseinheiten bzw. Bearbeitungsschritten entfallen und eine Bearbeitung des mindestens einen Bauteils kostensparend ausgeführt werden. Es kann somit eine Anzahl an stationären Robotern reduziert werden.

Erfindungsgemäss ist die mindestens eine Bearbeitungseinheit mit dem Arbeitsbereich stationär angeordnet. Vorteilhafterweise ist die mindestens eine Bearbeitungseinheit mit dem Arbeitsbereich und dem mindestens einen dort angeordneten Werkzeug zum Bearbeiten des mindestens einen Bauteils oder zum Einwirken auf das mindestens eine Bauteil stationär bzw. zumindest im Wesentlichen stationär ausgeführt. Die Bearbeitungseinheit kann lokal auf einem begrenzten Platz, beispielsweise innerhalb einer Produktionshalle oder einer Fabrik, stationär platziert sein. Alternativ können mehrere Bearbeitungseinheiten auch gebäudeübergreifend, in verschiedenen Räumen oder auch in verschiedenen Gebäuden, jedoch ebenfalls jeweils stationär angeordnet sein. Die dort jeweils angeordneten Werkzeuge können hinsichtlich ihrer jeweiligen notwendigen Beweglichkeit ebenfalls im Wesentlichen feststehend ausgebildet sein und nur insoweit dynamisches Verhalten zeigen als sie bspw. dazu konfiguriert sind, ein Mittel auf dem mindestens einen zu bearbeitenden Bauteil zu applizieren.

Gemäß einem weiteren Ausführungsbeispiel des Bearbeitungssystems ist das Fahrzeug ein fahrerloses Fahrzeug. Das Fahrzeug kann beispielsweise ein Schienenfahrzeug oder ein autonomes Fahrzeug sein, welches kontrolliert bestimmte Bearbeitungseinheiten bzw. Arbeitsbereiche anfahren kann und das mindestens eine Bauteil von einem Arbeitsbereich bzw. von einem dort angeordneten Werkzeug zu einem anderen Arbeitsbereich bzw. einem anderen dort angeordneten Werkzeug transportieren kann. Die auf dem Fahrzeug angeordnete Aufnahmeeinheit kann das mindestens eine Bauteil entsprechend den Anforderungen einer jeweiligen Bearbeitungseinheit und dem dort jeweils angeordneten Werkzeug vor und/oder während der Bearbeitung ausrichten oder bewegen. Das fahrerlose Fahrzeug kann beispielsweise autonom über eine fahrzeuginterne Steuereinheit die Aufnahmeeinheit und darüber das mindestens eine Bauteil bewegen bzw. verfahren. Hierbei kann auch eine Kommunikation mit der jeweiligen Bearbeitungseinheit erfolgen. Alternativ kann das fahrerlose Fahrzeug von einer fahrzeugexternen Steuereinheit angesteuert werden, wobei die Steuerbefehle über entsprechende drahtlose oder drahtgebundene Kommunikationseinheiten übertragen werden können. Das Fahrzeug kann anschließend auch das mindestens eine fertig bearbeitete Bauteil zu einem Lager transportieren und beispielsweise an ein Lagersystem übergeben.

Nach einer weiteren Ausführungsform des Bearbeitungssystems ist das mindestens eine Bauteil durch die auf dem Fahrzeug angeordnete Aufnahmeeinheit zum Aufnehmen des mindestens einen Bauteils zwischen mindestens zwei Arbeitsbereichen von mindestens zwei Bearbeitungseinheiten transportierbar. Vorzugsweise können statt mehreren komplexen Bearbeitungseinheiten mit eigenen aktiven Ansteuerungen zum Positionieren von dort jeweils angeordneten Werkzeugen einfach ausgeführte Bearbeitungseinheiten mit unbeweglichen Werkzeugen oder nur eindimensional, wie beispielsweise entlang der z-Richtung, bewegbaren Werkzeugen verwendet werden, die jeweils stationär in der Bearbeitungseinheit angeordnet sind. Die Aufgabe einer Ausrichtung und Positionierung des mindestens einen Bauteils kann stattdessen die Aufnahmeeinheit in Kombination mit dem Fahrzeug, auf bzw. an dem sie angeordnet ist, übernehmen. Da die Aufnahmeeinheit auf einem bewegbaren Fahrzeug angeordnet ist, kann die hierdurch verfahrbare und ggf. zusätzlich auch eigenständig verfahrbare Aufnahmeeinheit das Bauteil zu mehreren Bearbeitungseinheiten nacheinander transportieren und dort entsprechend den Anforderungen des jeweiligen Bearbeitungsschritts das mindestens eine Bauteil bewegen und relativ zu dem jeweils an der Bearbeitungseinheit angeordneten Werkzeug positionieren.

Gemäß einem weiteren Ausführungsbeispiel des Bearbeitungssystems ist das mindestens eine Bauteil, wenn es durch die Aufnahmeeinheit aufgenommen ist, durch eine Hubvorrichtung der Aufnahmeeinheit in einer z-Richtung verfahrbar. Die mindestens eine Bearbeitungseinheit kann technisch besonders einfach ausgeführt sein, wenn die mindestens eine Aufnahmeeinheit das mindestens eine Bauteil in einer z-Richtung verfahren kann. Insbesondere kann hierbei ein Abstand zwischen dem an der Bearbeitungseinheit angeordneten Werkzeug und dem mindestens einen Bauteil flexibel eingestellt werden. Somit kann das Werkzeug von der mindestens einen Bearbeitungseinheit feststehend ausgeführt sein.

Nach einer weiteren Ausführungsform des Bearbeitungssystems ist das mindestens eine Bauteil, wenn durch die Aufnahmeeinheit aufgenommen, durch die Aufnahmeeinheit drehbar oder kippbar. Durch ein Drehen des mindestens einen Bauteils in einer Ebene können Bearbeitungsschritte schneller durchgeführt werden. Beispielsweise kann eine runde Dichtfläche an einem Flansch schneller mit einem Dichtmittel versehen werden. Durch ein Kippen des mindestens einen Bauteils können zusätzliche Bearbeitungsschritte, wie beispielsweise eine schräge Bohrung oder ein mehrdimensionaler Fräsvorgang durchgeführt werden.

Nach einer weiteren Ausführungsform des Bearbeitungssystems weisen mindestens zwei fahrerlose Fahrzeuge, ein erstes und ein zweites Fahrzeug, und mindestens eine Bearbeitungseinheit jeweils mindestens eine technische Kommunikationsvorrichtung zum direkten oder indirekten drahtgebundenen oder drahtlosen Kommunizieren bzw. Datenaustausch auf. Beispielsweise kann hierdurch das erste Fahrzeug erst dann in einen Arbeitsbereich der mindestens einen Bearbeitungseinheit hineinfahren, wenn der Arbeitsbereich der mindestens einen Bearbeitungseinheit nicht bspw. durch das zweite Fahrzeug belegt ist und das Bauteil in dem Bearbeitungsschritt durch das entsprechende Werkzeug des Arbeitsbereichs der mindestens einen Bearbeitungseinheit bearbeitet werden soll. Das erste Fahrzeug wird dabei von einer Belegung bzw. Nicht-Belegung des Arbeitsbereichs der mindestens einen Bearbeitungseinheit durch die Bearbeitungseinheit selbst und/oder von dem zweiten Fahrzeug, das den Arbeitsbereich aktuell belegt oder gerade verlassen hat, und/oder sowohl von der Bearbeitungseinheit als auch von dem zweiten Fahrzeug mittels der vorgesehenen Kommunikationsvorrichtungen informiert. Das erste Fahrzeug fährt anschließend erst aus dem Arbeitsbereich der mindestens einen Bearbeitungseinheit raus, wenn zumindest der in dem Arbeitsbereich auszuführende Arbeitsschritt an dem Bauteil beendet ist. Kollisionen können vermieden werden, wenn eine Kommunikation zwischen mehreren Fahrzeugen und/oder zwischen Fahrzeug und jeweiliger Bearbeitungseinheit besteht. Ferner kann ein Fahrzeug auch mit der auf dem Fahrzeug angeordneten Aufnahmeeinheit kommunizieren, um beispielsweise festzustellen, ob die Aufnahmeeinheit durch ein aufgenommenes Bauteil belegt ist. Alternativ oder zusätzlich kann das Fahrzeug auch mit den anzusteuernden Bearbeitungseinheiten kommunizieren, um zu ermitteln, ob die Bearbeitungseinheiten belegt oder frei sind. Zusätzlich können die Bearbeitungseinheiten dem mindestens einen Fahrzeug mitteilen, wie lange ihre Belegung bzw. der derzeit getätigte Arbeitsschritt andauert, um weitere Routen des mindestens einen Fahrzeuges mit dem durch die Aufnahmeeinheit aufgenommenen Bauteil zu planen. So können auch mehrere beliebig angeordnete Bearbeitungseinheiten von einem oder nacheinander von mehreren Fahrzeugen mit jeweils mindestens einer Aufnahmeeinheit und jeweils darin aufgenommenem Bauteil zum Durchführen von verschiedenen Bearbeitungsschritten angefahren werden. Alternativ kommunizieren die Fahrzeuge, ggf. die darauf jeweils angeordneten Aufnahmeeinheiten, die Werkzeuge bzw. die entsprechenden Bearbeitungseinheiten mit einer externen Servereinheit. Die Servereinheit kann die übersendeten Daten auswerten und die optimalen Routen für die Fahrzeuge und Reihenfolgen der Ansteuerungen der Bearbeitungseinheiten ermitteln. Diese können dann von der Servereinheit an die Kommunikationseinheiten bzw. -vorrichtungen der verschiedenen Fahrzeuge und/oder der Bearbeitungseinheiten übermittelt werden. Hierdurch können Arbeitsschritte an verschiedenen Bearbeitungseinheiten zeitlich optimal geplant und die Produktion bzw. Bearbeitung der jeweils von den verschiedenen Fahrzeugen transportierten Bauteile beschleunigt werden.

Gegenstand der vorliegenden Erfindung ist ein Verfahren zum Bearbeiten mindestens eines Bauteils mit einem voranstehend beschriebenen Bearbeitungssystem, wobei durch mindestens eine auf mindestens einem Fahrzeug angeordnete Aufnahmeeinheit das mindestens eine Bauteil aufgenommen wird. Anschließend wird durch das mindestens eine Fahrzeug das mindestens eine Bauteil in einem Arbeitsbereich mindestens einer Bearbeitungseinheit angeordnet. In dem Arbeitsbereich wird das mindestens eine Bauteil zum Bearbeiten durch das mindestens eine Fahrzeug und/oder durch die auf dem Fahrzeug angeordnete Aufnahmeeinheit relativ zu mindestens einem in dem Arbeitsbereich angeordneten Werkzeug in mindestens zwei Richtungen bewegt, insbesondere ausgerichtet, und dabei gleichzeitig durch das Werkzeug bearbeitet, wobei in einer x-y-Ebene durchgeführte Bewegungen des mindestens einen Bauteils durch Antriebseinheiten des Fahrzeugs und/oder der auf dem Fahrzeug angeordneten Aufnahmeeinheit realisiert werden.

Hierdurch kann die mindestens eine Bearbeitungseinheit technisch einfach ausgeführt sein. Insbesondere können die jeweiligen in der Bearbeitungseinheit verwendeten bzw. angeordneten Werkzeuge unbeweglich oder bspw. in nur einer Richtung beweglich ausgeführt sein. Alle weiteren zum Bearbeiten des Bauteils notwendigen Bewegungsabläufe können durch das Fahrzeug selbst und/oder durch die auf dem Fahrzeug angeordnete Aufnahmeeinheit ausgeführt werden. Insbesondere können in einer x-y-Ebene durchgeführte Bewegungen bzw. Auslenkungen des mindestens einen Bauteils durch Antriebseinheiten des Fahrzeugs und/oder der auf dem Fahrzeug angeordneten Aufnahmeeinheit realisiert werden.

Hierdurch können kostenintensive und einen relativ hohen Flächenbedarf aufweisende stationäre Roboter, die häufig einfache Bewegungen ausführen müssen, ersetzt und Flächen in Produktionshallen eingespart werden.

Die Erfindung ist anhand von Ausführungsformen in den Zeichnungen schematisch dargestellt und wird unter Bezugnahme auf die Zeichnungen weiter beschrieben. Es zeigt:
- Figur 1: in einer schematischen Darstellung ein Bearbeitungssystem mit zwei Bearbeitungseinheiten;
- Figur 2: verschiedene mögliche Bewegungsabläufe eines von einer Aufnahmeeinheit aufgenommenen Bauteils gemäß einer Ausführungsform des erfindungsgemäßen Verfahrens.

In den Figuren weisen dieselben konstruktiven Elemente jeweils dieselben Bezugsziffern auf.

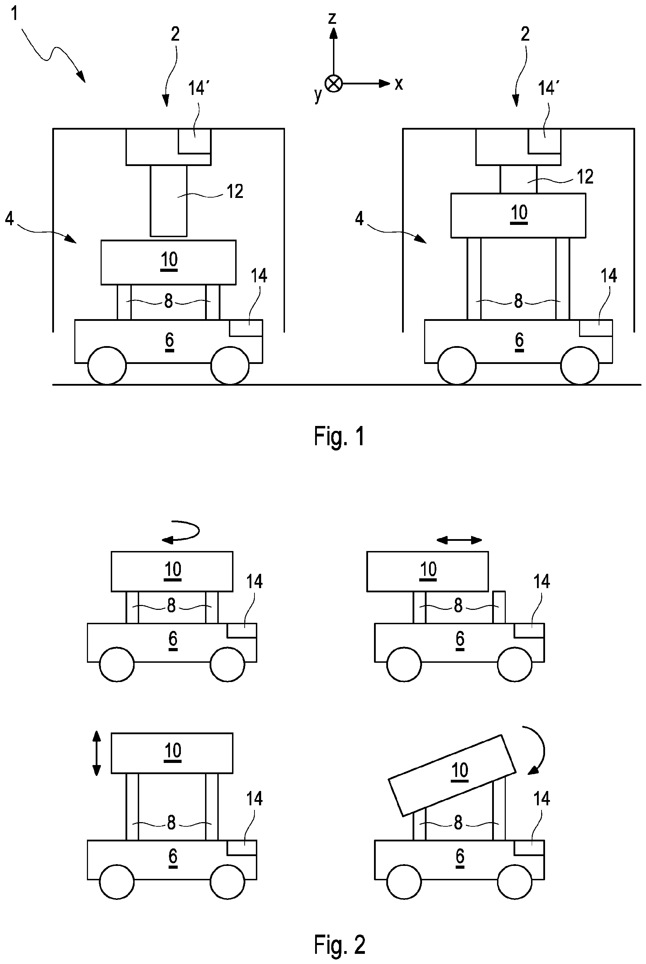

Figur 1 zeigt in einer schematischen Darstellung ein Bearbeitungssystem 1 mit zwei Bearbeitungseinheiten 2. In den Bearbeitungseinheiten 2 sind jeweils in einem Arbeitsbereich 4 auf einem Fahrzeug 6 angeordnete Aufnahmeeinheiten 8 positioniert. Die Aufnahmeeinheiten 8 haben jeweils ein Bauteil 10 aufgenommen und bewegen das Bauteil 10 entsprechend für den Bearbeitungsschritt der Bearbeitungseinheit 2 vorgesehenen Bewegungsabläufen. Insbesondere wird das Bauteil 10 von der Aufnahmeeinheit 8 an das Werkzeug 12 verfahren, um das Bauteil 10 mit dem Werkzeug 12 bearbeiten zu können, wobei hierfür gemäß dem dargestellten Ausführungsbeispiel ein Verfahren in einer z-Richtung, x-Richtung und/oder einer y-Richtung möglich ist.

Die Fahrzeuge 6 sind mit den jeweiligen Aufnahmeeinheiten 8 kommunizierend verbunden und können ferner durch jeweils eine Kommunikationsvorrichtung 14 mit einer Kommunikationsvorrichtung 14' der Bearbeitungseinheit 2 kommunizieren bzw. Daten austauschen. Hierdurch kann die Bearbeitungseinheit 2 indirekt die für den an der Bearbeitungseinheit 2 durchzuführenden Bearbeitungsschritt benötigten Bewegungsabläufe der Aufnahmeeinheit 8 und des Fahrzeugs 6 kontrollieren und/oder koordinieren. Insbesondere kann die Aufnahmeeinheit 8 das Bauteil 10 derart verfahren, dass das Werkzeug 12 nicht verfahren werden muss und somit feststehend ausgeführt sein kann.

Figur 2 veranschaulicht verschiedene mögliche Bewegungsabläufe eines von einer Aufnahmeeinheit 8 aufgenommenen Bauteils 10 gemäß einer erfindungsgemäßen Ausführungsform. Die Aufnahmeeinheit 8 ist hierbei auf einem fahrerlosen Fahrzeug 6 angeordnet. Das Bauteil 10 kann, wie in der Figur links oben angedeutet, durch die Aufnahmeeinheit 8 horizontal rotiert werden. Ferner kann das Bauteil 10, wie in der Figur rechts oben gezeigt, in einer x-Richtung und y-Richtung verfahren werden. Darüber hinaus kann das Bauteil 10, wie in der Figur links unten dargestellt, in einer Höhe bzw. z-Richtung eingestellt werden. Des Weiteren kann das Bauteil 10 durch die Aufnahmeeinheit 8, wie in der Figur rechts unten gezeigt, entlang zumindest einer Achse verkippt werden. Die Pfeile in den Figuren verdeutlichen die Bewegungsmöglichkeiten des Bauteils 10.

### Bezugszeichenliste

- 1: Bearbeitungssystem
- 2: Bearbeitungseinheit
- 4: Arbeitsbereich
- 6: Fahrzeug
- 8: Aufnahmeeinheit
- 10: Bauteil
- 12: Werkzeug
- 14: Kommunikationsvorrichtung des Fahrzeugs
- 14': Kommunikationsvorrichtung der Bearbeitungseinheit

## Patentansprüche

1. Verfahren zum Bearbeiten mindestens eines Bauteils (10) mit einem Bearbeitungssystem (1) zum Ausrichten und Bearbeiten mindestens eines Bauteils (10), das mindestens zwei Bearbeitungseinheiten (2) mit jeweils einem Arbeitsbereich (4) aufweist,
wobei in dem Arbeitsbereich (4) mindestens ein stationäres Werkzeug (12) angeordnet ist, und mindestens eine auf mindestens einem Fahrzeug (6) angeordnete Aufnahmeeinheit (8) zum Aufnehmen des mindestens einen Bauteils (10) aufweist, wobei das mindestens eine durch die Aufnahmeeinheit aufgenommene Bauteil (10) durch das mindestens eine Fahrzeug (6) in mindestens zwei Richtungen verfahrbar ist, bei dem
- durch mindestens eine auf mindestens einem Fahrzeug (6) angeordnete Aufnahmeeinheit (8) das mindestens eine Bauteil (10) aufgenommen wird,
- durch das mindestens eine Fahrzeug (6) das mindestens eine Bauteil (10) in einem Arbeitsbereich (4) mindestens einer Bearbeitungseinheit (2) angeordnet wird,
- zum Bearbeiten des mindestens einen Bauteils (10) das mindestens eine Bauteil (10) durch das mindestens eine Fahrzeug (6) relativ zu mindestens einem in dem Arbeitsbereich (4) angeordneten stationären Werkzeug (12) in mindestens zwei Richtungen bewegt und dabei gleichzeitig durch das Werkzeug (12) bearbeitet wird, wobei in einer x-y-Ebene durchgeführte Bewegungen des mindestens einen Bauteils (10) durch Antriebseinheiten des Fahrzeugs (6) und/oder der auf dem Fahrzeug (6) angeordneten Aufnahmeeinheit (8) realisiert werden, und
- das mindestens eine durch die Aufnahmeeinheit (8) aufgenommene Bauteil (10) durch das Fahrzeug (6) zwischen mindestens zwei Arbeitsbereichen (4) von mindestens zwei Bearbeitungseinheiten (2) transportiert wird.

2. Verfahren nach Anspruch 1, worin das Fahrzeug (6) fahrerlos autonom fährt.

3. Verfahren nach Anspruch 1 oder 2, wobei das mindestens eine durch die Aufnahmeeinheit (8) aufgenommene Bauteil (10) durch eine Hubvorrichtung der Aufnahmeeinheit (8) in einer z-Richtung bewegt wird.

4. Verfahren nach einem der voranstehenden Ansprüche, wobei das mindestens eine durch die Aufnahmeeinheit (8) aufgenommene Bauteil (10) durch die Aufnahmeeinheit (8) gedreht und/oder gekippt wird.

5. Verfahren nach einem der voranstehenden Ansprüche, wobei das mindestens eine Fahrzeug (6) und die mindestens eine Bearbeitungseinheit (2) jeweils über mindestens eine technische Kommunikationsvorrichtung (14, 14') direkt oder indirekt untereinander kommunizieren bzw. Daten austauschen.

6. Verfahren nach einem der voranstehenden Ansprüche, bei dem das mindestens eine Fahrzeug (6) und damit die mindestens eine auf dem mindestens einen Fahrzeug (6) angeordnete Aufnahmeeinheit (8) ferngesteuert wird.

7. Verfahren nach Anspruch 5, bei dem das mindestens eine Fahrzeug (6) und die mindestens eine Bearbeitungseinheit (2) mittels jeweils vorgesehener technischer Kommunikationsmittel direkt und/oder über eine externe Servereinheit indirekt miteinander kommunizieren und dadurch zum Bearbeiten des Bauteils (10) durchzuführende Bearbeitungsschritte abstimmen und/oder koordinieren.

## Claims

1. Method for machining at least one component (10) with a machining system (1) for aligning and machining at least one component (10), which system comprises at least two machining units (2) with a working range (4), whereby at least one tool (12) is arranged in the working range (4) and comprises at least one pick-up unit (8) arranged on at least one vehicle (6) to pick up the at least component (10), whereby the at least one component (10) picked up by the pick-up unit is movable by the at least one vehicle (6) in at least two directions, in which
- the at least one component (10) is picked up by at least one pick-up unit (8) arranged on at least one vehicle (6),
- the at least one component (10) is arranged in a working range (4) of at least one machining unit (2) by the at least one vehicle (6),
- for machining of the at least one component (10) the at least one component (10) is moved by the at least one vehicle (6) in at least two directions relative to at least one stationary tool (12) arranged in the working range (4) and thereby is simultaneously machined by the tool (12), whereby movements of the at least one component (10) carried out in an x-y plane are implemented by drive units of the vehicle (6) and/or the pick-up unit (8) arranged on the vehicle (6), and
- the at least one component (10) picked up by the pick-up unit (8) is transported by the vehicle (6) between at least two working ranges (4) of at least two machining units (2).

2. Method according to claim 1, in which the vehicle (6) is driverless and drives autonomously.

3. Method according to claim 1 or 2, whereby the at least one component (10) picked up by the pick-up unit (8) is moved by a lifting device of the pick-up unit (8) in a z-direction.

4. Method according to any of the preceding claims, whereby the at least one component (10) picked up by the pick-up unit (8) is rotated and/or tilted by the pick-up unit (8).

5. Method according to any of the preceding claims, whereby the at least one vehicle (6) and the at least one machining unit (2) in each case communicate with one another directly or indirectly or exchange data by means of at least one technical communication device (14, 14').

6. Method according to any of the preceding claims, in which the at least one vehicle (6) and thus the at least one pick-up unit (8) arranged on the at least one vehicle (6) is remote-controlled.

7. Method according to claim 5, in which the at least one vehicle (6) and the at least one machining unit (2) communicate with one another directly by means of respectively provided technical communication and/or indirectly via an external server unit and thereby adjust and/or co-ordinate machining steps to be carried out for machining of the component (10).

## Revendications

1. Procédé d'usinage d'au moins un composant (10) avec un système d'usinage (1) permettant d'orienter et usiner au moins un composant (10) qui présente au moins deux unités d'usinage (2) munies respectivement d'une zone de travail (4),
dans lequel au moins un outil fixe (12) est agencé dans la zone de travail (4) et présente au moins une unité d'accueil (8) agencée sur au moins un véhicule (6) et permettant d'accueillir le au moins un composant (10), dans lequel le au moins un composant (10) accueilli par l'unité d'accueil peut être déplacé dans au moins deux directions grâce au au moins un véhicule (6), dans lequel
- le au moins un composant (10) est accueilli par au moins une unité d'accueil (8) agencée sur au moins un véhicule (6),
- le au moins un composant (10) est agencé dans une zone de travail (4) d'au moins une unité d'usinage (2) grâce au au moins un véhicule (6),
- le au moins un composant (10) est déplacé dans au moins deux directions grâce au au moins un véhicule (6) par rapport à au moins un outil fixe (12) agencé dans la zone de travail (4) et est simultanément usiné grâce à l'outil (12), dans lequel des déplacements, effectués dans un plan x-y, du au moins un composant (10) sont réalisés grâce à des unités d'entraînement du véhicule (6) et/ou de l'unité d'accueil (8) agencée sur le véhicule (6), et
- le au moins un composant (10) accueilli par l'unité d'accueil (8) est transporté entre au moins deux zones de travail (4) d'au moins deux unités de traitement (2) grâce au véhicule (6).

2. Procédé selon la revendication 1, dans lequel le véhicule (6) circule de manière autonome sans conducteur.

3. Procédé selon la revendication 1 ou 2, dans lequel le au moins un composant (10) accueilli par l'unité d'accueil (8) est déplacé dans une direction z grâce à un dispositif de levage de l'unité d'accueil (8).

4. Procédé selon l'une quelconque des revendications précédentes, dans lequel le au moins un composant (10) accueilli par l'unité d'accueil (8) est tourné et/ou basculé par l'unité d'accueil (8).

5. Procédé selon l'une quelconque des revendications précédentes, dans lequel le au moins un véhicule (6) et la au moins une unité de traitement (2) communiquent ensemble ou échangent des données directement ou indirectement par l'intermédiaire d'au moins un dispositif technique de communication (14, 14').

6. Procédé selon l'une quelconque des revendications précédentes, dans lequel au moins un véhicule (6), et par conséquent la au moins une unité d'accueil (8) agencée sur le au moins un véhicule (6), est commandé à distance.

7. Procédé selon la revendication 5, dans lequel le au moins un véhicule (6) et la au moins une unité d'usinage (2) communiquent ensemble directement grâce respectivement à des moyens techniques de communication fournis et/ou indirectement par l'intermédiaire d'une unité de serveur externe et harmonisent et/ou coordonnent ainsi les étapes d'usinage à mettre en œuvre pour usiner le composant (10).
